# EUROPEAN PATENT APPLICATION

(11) **EP 0 829 684 A1**
(43) Date of publication of application: **18.03.1998**
(21) Application number: 96830467.5
(22) Date of filing: 13.09.1996
(51) Int. Cl.: F23J 7/00, F23N 5/08

(54) **Method and device for the selective, non catalytic reduction of the emissions from boiler plants**

(71) Applicant: FINMECCANICA S.p.A. AZIENDA ANSALDO, I-16128 Genova (IT)
(72) Inventor: Repetto, Francesco, 16016 Cogoleto (IT)
(74) Representative: Jorio, Paolo, Dr. Ing.

(57) **Abstract**

The method involves: defining, within the thermal system, a number of regions generating or through which transit products of the combustion process, e.g. different predetermined internal regions of a boiler; accurately determining, independently in each region, the instantaneous temperature and possibly also the instantaneous concentration of a chemical species constituting a residual product for removal of the combustion process; and injecting, independently into each region, a predetermined quantity of a chemical reagent capable of reacting with the residual product for removal; the instantaneous temperature values and possibly also the instantaneous concentration values being detected continuously by laser diode systems, each of which provides for emitting radiation within a frequency band about a predetermined wavelength; nitric oxides NOₓ generated at the transient operating stages of a normally low-emission thermal system preferably being removed by detecting predetermined parameters in the exhaust fumes of the thermal system by means of a sensor; and the laser emission being effected about the oxygen absorption line, at about 760 nm.

## Description

The present invention relates to a method and device for noncatalytically removing pollutant chemical species, resulting from the combustion of fossil fuel, biomasses or refuse in a thermal system, by injecting chemical reagents into given sections of the system, and may be used in particular for removing nitric oxides (NOₓ) produced inside a combustion chamber - in the example described, inside the tube nest boiler of a steam generating system.

Combustion processes for generating energy, particularly in the case of exothermic systems such as the steam boilers of thermal power plants, produce various pollutant combustion products, which may be generated by the combustion process itself - e.g. too much air produces nitric oxides NOₓ - or may be contained originally in the fuel and given off from this during combustion (particularly in the case of fuel in the form of pollutant waste such as sludge from purifying systems, solid urban refuse, industrial waste, etc.).

Such pollutants - which here and in the following description are referred to by the general term of residual combustion products - are either removed by accurately controlling combustion parameters (excess air, fuel composition, temperature, flow, etc.) to reduce production at the source, or are eliminated from the exhaust fumes, before these are liberated into the atmosphere, by means of appropriate equipment (filters, scrubbers, catalysts, etc.). Being effective under only constant operating conditions, however, neither of the above methods is suitable for use, for example, at the transient operating stages of a boiler, coverage of which (albeit poorly) by an exhaust fume purifying system would involve enormous expense.

According to a further method, certain residual combustion products are eliminated directly inside the boiler by exploiting the high temperature inside, and injecting into the boiler appropriate chemical reagents capable of combining with the chemical species for removal. For example, nitric oxides NOₓ are theoretically removable by simply injecting ammonia, urea or other reagents into the boiler. In the case of nitric oxides, however, the ammonia (urea or other reagents) must be injected within a narrow temperature range of 850-1100°C (actually narrower for ammonia and wider for urea) and remain at that temperature for a fairly precise length of time. Failure to meet these conditions, in fact, results in:
- emission of nitrous oxide N₂O, which, though not currently covered by regulations governing emissions, is more toxic than the nitric oxides covered;
- poor removal of nitric oxides;
- emission of poorly reacted ammonia and/or urea in the exhaust fumes.

In other words, pollution may possibly be increased as opposed to reduced.

To overcome the above drawback, current systems employ complex chemical reagents capable of operating within a wider temperature and time range. Such commercial chemical compounds, however, are relatively expensive.

Several attempts have also been made to measure the temperature more or less directly inside the combustion chamber, the commercial application of which, however, has so far been limited by not knowing the exact temperature at various parts of the boiler.

It is an object of the present invention to provide a method of noncatalytically removing pollutant residual chemical species, resulting from combustion in a thermal system, by injecting chemical reagents into the system, the method being designed to overcome the aforementioned drawbacks by, in particular, requiring no high-cost, complex equipment, being cheap to implement, and only intervening when actually necessary, e.g. at the transient operating stages of a boiler forming part of an otherwise conforming thermal power plant.

According to the present invention, there is provided a method of noncatalytically removing pollutant residual products, in particular NOₓ, of a combustion process in a thermal system by injecting reagents into the thermal system, characterized by comprising the steps of:
- defining, within the thermal system, a number of regions generating or through which transit products of said combustion process;
- accurately determining, independently in each of said regions, the instantaneous temperature and possibly also the instantaneous concentration of a chemical species constituting a residual product for removal of said combustion process;
- injecting, independently into each said region, a chemical reagent capable of reacting with the residual product for removal, and of a quantity depending on the instantaneous temperature value and possibly also the instantaneous concentration value detected in that region; said instantaneous temperature value and possibly also said instantaneous concentration value in each region being detected by means of a scanning step using laser diode systems and wherein radiation varying about a predetermined wavelength as a function of the chemical species for removal is emitted through each said region.

More specifically, said pollutant residual products of said combustion process are nitric oxides NOₓ generated at the transient operating stages of a boiler of a normally low-emission thermal system. In which case, for temperature measurements (of oxygen in particular), laser emission at said scanning step is performed about the oxygen absorption line, at about 760 nm, and the nitric oxides are subsequently eliminated by injecting ammonia or urea, through appropriate nozzles numbering at least one for each said region, into the region which an appropriate calculation code considers the best at that particular moment. For better metering the reagents, a second laser may be provided for direct, point-by-point measurement of the nitric oxides NOₓ.

As opposed to substantially uncontrolled removal based on no more than approximate knowledge of the amount of pollutant present in the system section in question (e.g. the boiler), and possibly also an approximate temperature reading using optical pyrometers (notoriously inaccurate), the present invention therefore provides for highly controlled, differential removal region by region, thus enabling the use of simple low-cost reagents, as opposed to the complex, high-cost types normally used in noncatalytic systems, with no risk of polluting the exhaust fumes.

The present invention also relates to a device for noncatalytically removing pollutant residual products, in particular NOₓ, of a combustion process in a thermal system by injecting reagents into the thermal system, characterized by comprising:
- a number of laser diode systems, each for accurately determining the instantaneous temperature value and possibly also the instantaneous concentration value of a pollutant for removal in a predetermined region of at least one section of said thermal system; said laser diode systems being of such a number and so located that the total volume of said regions monitored thereby is at least equal to the total volume of said section;
- a number of nozzles, at least one for each said region, housed inside said section and for evenly injecting a predetermined chemical reagent into the respective said region;
- at least one sensor for detecting, in the exhaust fumes of the thermal system, a predetermined parameter related to the generation of said pollutant for removal;
- a central control unit for receiving the signals of said at least one exhaust fume sensor, and, as a function of said signals, for activating said laser diode systems to scan each said region with radiation varying within a wide frequency band and about a predetermined wavelength depending on the pollutant for removal, and for subsequently injecting into each said region, by means of a respective nozzle, a quantity of said chemical reagent depending on the detected temperature and possibly also the detected concentration value of the pollutant.

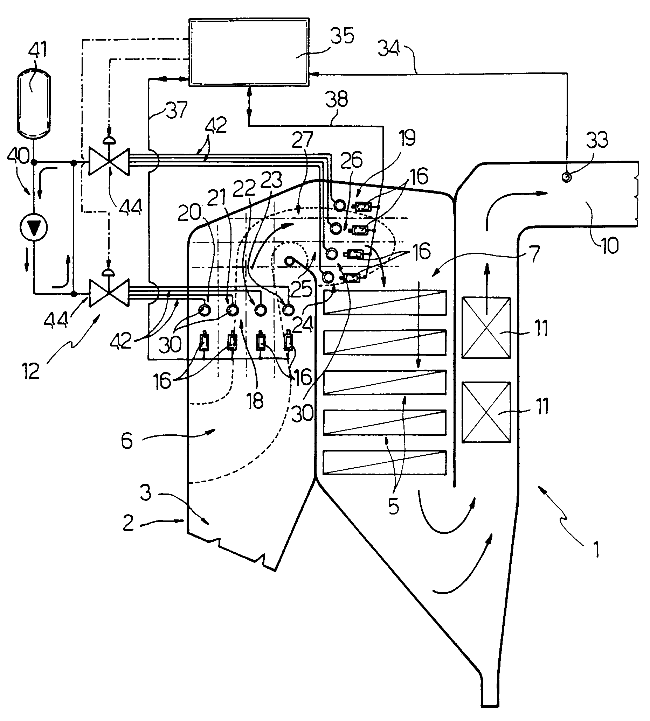

A non-limiting embodiment of the present invention will be described by way of example with reference to the accompanying drawing, which shows a schematic side section of the boiler of a thermal system equipped with the device according to the invention.

Number 1 in the accompanying drawing indicates a thermal system, of which, for the sake of simplicity, is only shown schematically a known boiler 2 comprising a combustion chamber 3 housing a number of known, e.g. tube nest, heat exchangers 5. In the example shown, combustion chamber 3 comprises a radiating region 6 and, upstream from this, a superheater 7 of which exchangers 5 form part.

Boiler 2 also comprises appropriate burners (not shown); a combustion control system (not shown); and an exhaust pipe 10 connected in known manner to a stack (not shown) and fitted, preferably inside, with preheat heat exchangers or regenerators 11. The dotted lines between radiating region 6 and superheater 7 represent two isotherms showing the qualitative temperature pattern of the burnt gases inside chamber 3 of boiler 2 (the dotted line closest to region 6 represents a 1000°C isotherm and the other a 900°C isotherm).

According to the invention, thermal system 1 also comprises an emission control device indicated as a whole by 12, and which, by injecting reagents directly into boiler 2, provides for noncatalytically removing pollutant residual products of the combustion process conducted inside chamber 3 of boiler 2. More specifically, the device 12 shown is designed to remove the nitric oxides (NOₓ) produced inside chamber 3 of boiler 2 at the transient operating stages of thermal system 1.

According to the invention, device 12 comprises a number of laser diode systems 16 (shown only schematically), each of which provides for accurately determining the instantaneous temperature value and possibly also the instantaneous concentration value of a pollutant for removal (in this case, nitric oxides) in a predetermined region of a section of thermal system 1, and is of the type described in copending European Patent Application n. 95830402.4 filed on 29.09.95 by the present Applicant. Briefly, each system 16 comprises a laser emitter in turn comprising a longitudinal-single-mode diode preferably fitted to a vibration-damping support and maintained at constant temperature on the outside of boiler 2; an optical window formed through the wall of boiler 2 so that the laser beam emitted by the diode of each system 16 travels along a predetermined optical path through a predetermined region of the inner volume of chamber 3; a second optical window formed through the wall of boiler 2 on the opposite side to the optical path, and through which the laser beam also travels, but only after traveling through chamber 3; a photodetector located behind the second optical window, and for receiving the laser beam emitted by the respective diode, and converting it, according to its intensity, into an analog signal; and an analog/digital converter (A/D).

According to the invention, boiler 2 is fitted with a number of systems 16 arranged side by side in two separate predetermined sections of boiler 2 indicated 18 and 19 and respectively located on the radiating region 6 side and immediately upstream from superheater 7, i.e. in the regions best suited theoretically, under different operating conditions of thermal system 1, to reach given temperature levels inside chamber 3. Each system 16 is also so located that said optical path between the emitter diode and corresponding photodetector covers a single region of predetermined volume of relative section 18 or 19; systems 16 of each section 18 and 19 are so arranged in relation to one another that said single regions traveled by the optical paths of respective systems 16 are all adjacent to one another and are of such a number that the total volume of the single regions monitored by them is at least equal to the total volume of the relative section.

In the example shown, section 18, for example, comprises four laser systems 16 equally spaced along the whole width of the section, so that the optical paths defined by respective systems 16 (and shown schematically by the dot-and-dash lines) ideally divide section 18 into four adjacent, nonoverlapping regions 20, 21, 22, 23 of a total volume equal to the volume of section 18 as a whole, i.e. of such a size as to cover the whole of section 18. Similarly, section 19 is ideally divided into four adjacent regions 24, 25, 26, 27, each covered by the optical path (shown by the dot-and-dash line) of a respective system 16 in section 19.

According to the invention, device 12 also comprises a number of known nozzles 30 (shown schematically by small circles) fitted through the wall of (or directly inside) boiler 2 at regions 20,21,22,23 and 24,25,26,27 and numbering at least one for each region, so that sections 18 and 19 each comprise four nozzles 30, each for evenly injecting a predetermined chemical reagent into the respective section region. Device 12 also comprises at least one known sensor 33 for detecting, in the exhaust fumes of thermal system 1, a predetermined parameter related to generation of the pollutant for removal; and a central, e.g. digital, control unit 35 (comprising a microprocessor or a series of programmable PLCs).

Central control unit 35 receives the signals from sensor 33, e.g. over a line 34, and, depending on the signals (e.g. upon a given threshold value being exceeded), activates laser diode systems 16 to scan each region 20-23 of section 18 or 24-27 of section 19 (or all the regions of both sections simultaneously) with laser radiation, which is emitted of predetermined intensity by the diode of each system 16, travels through the region covered by the respective optical path of system 16, and is received, attenuated, by the respective photodetector of the same system 16.

According to the invention, however, absorbance through respective region 20-23 or 24-27 is measured by each system 16 according to a special procedure and by means of appropriate commands of central control unit 35, which provides for controlling each system 16 separately and independently of the others, and for receiving the absorbance data of systems 16 over respective data lines 37, 38. More specifically, central control unit 35 provides for setting one or more diodes of systems 16 to a predetermined emission wavelength corresponding to a known absorption line of a pollutant chemical species for detection, and for subsequently emitting laser radiation through each respective region of section 18 and/or 19, and so regulating the diodes as to vary the emission frequency of each within a wide band and about the predetermined wavelength.

As stated, in fact, in said European Patent Application n. 95830402.4, if the emission frequency of the diodes of systems 16 is varied sufficiently (by about 10 GHz - easily achievable using longitudinal-single-mode laser diodes), the absorbance measurements made by systems 16 at the various emission frequencies of their diodes determine, for each region 20-23 or 24-27, the Voight profile relative to the absorption band of the chemical species corresponding to the absorption line on whose wavelength the diodes have been set to emit. By means of appropriate calculations, and given the Lorentz function relative to purely collision broadening of the absorption band of said chemical species (which may be memorized in central control unit 35), unit 35 is capable of working out the Gaussian curve corresponding to Doppler broadening of the absorption band of the chemical species. Since, as is known, the peak value of the Gaussian curve (occurring at the selected absorption line) is proportional to the concentration of the monitored chemical species in the volume through which the emitted radiation beam travels, whereas broadening of the Gaussian curve depends solely on the temperature of the monitored chemical species, central control unit 35, operating as described, is capable of working out, for each region 20-23 and 24-27, the instantaneous concentration and temperature value (the entire 10 GHz band is scanned in the space of milliseconds or even less) of any desired chemical species in each separate region 20-23 and/or 24-27.

Central control unit 35 also provides for controlling the injection, through nozzles 30, of predetermined quantities of chemical reagents into regions 20-23 and 24-27, and separately and independently for each region. More specifically, device 12 comprises a chemical reagent distribution circuit 40 in turn comprising at least one storage reservoir 41, and a number of lines 42 - one parallel line for each nozzle 30 - for supplying the reagent to nozzles 30. Each line 42 is controlled by at least a respective valve 44 (shown only schematically) connected to central control unit 35 and for controlling reagent supply and/or pressure in each line 42 independently. Provision may be made, for example, for a single multiline valve, or a series of regulating valves, one for each line 42.

Since device 12 in the example shown provides for removing nitric oxides NOₓ, the laser diode systems 16 used provide for emitting radiation about the oxygen absorption line, at about 760 nm; and ammonia or urea (e.g. in appropriate solution) is circulated in circuit 40 and injected by each nozzle 30 - controlled independently by central control unit 35 - into a respective region 20-23 or 24-27 independently from one region to another and in a quantity depending on the instantaneous nitric oxide temperature and concentration values detected continuously by respective system 16 scanning that particular region.

The method described provides for highly accurately detecting the temperature of any desired chemical species. As regards concentration, the presence of the monitored chemical species may be detected directly, or, as in the example described, the oxygen concentration may be detected to assess the amount of pollutant species, e.g. nitric oxides, present according to the quantity of air fed into the boiler and the stoichiometry of the combustion reaction.

Device 12 may also be used for removing other pollutant species, e.g. sulfur dioxide SO₂, by injecting basic reagents via nozzles 30 and according to the temperature values detected by systems 16. In this case also, the pollutant concentration values may be detected directly, or assessed, as described above, according to the quantity of oxygen detected by laser systems 16 and appropriately converted using known relations or test tables.

With reference to the above, the method of noncatalytically removing a pollutant residual product of a combustion process according to the present invention substantially comprises the steps of:
- defining, within the thermal system involving the combustion process - in the example described, inside chamber 3 of boiler 2 - a number of regions generating or through which transit products of the combustion process; in the example described, regions 20-23 in a first section 18 of boiler 2 and regions 24-27 in section 19 are defined by appropriately arranging systems 16 and nozzles 30;
- accurately determining, independently in each of regions 20-23, 24-27, the instantaneous temperature and possibly also the instantaneous concentration of a chemical species constituting a residual product for removal of said combustion process - in the example described, nitric oxides; and
- injecting, independently into each region 20-23 and/or 24-27, a chemical reagent - in the example described, ammonia or urea - capable of reacting with the residual product for removal, and of a quantity depending on the instantaneous temperature and concentration values detected in that region.

Moreover, said instantaneous temperature and concentration values in regions 20-27 are detected indirectly, as described, by means of a scanning step using laser diode systems 16, and wherein radiation varying about a predetermined wavelength as a function of the chemical species for removal is emitted through each region. To detect nitric oxides, the scanning step is preferably performed about the oxygen absorption line, at about 760 nm. The scanning step (and subsequent reagent injection step, if any) may be performed only when required, e.g. upon sensor 33 detecting a variation in the composition of the exhaust fumes along pipe 10.

## Claims

1. A method of noncatalytically removing pollutant residual products, in particular NOₓ, of a combustion process in a thermal system by injecting reagents into the thermal system, characterized by comprising the steps of:
- defining, within the thermal system, a number of regions generating or through which transit products of said combustion process;
- accurately determining, independently in each of said regions, the instantaneous temperature and possibly also the instantaneous concentration of a chemical species constituting a residual product for removal of said combustion process;
- injecting, independently into each said region, a chemical reagent capable of reacting with the residual product for removal, and of a quantity depending on the instantaneous temperature value and possibly also the instantaneous concentration value detected in that region; said instantaneous temperature value and possibly also said instantaneous concentration value in each region being detected by means of a scanning step using laser diode systems and wherein radiation varying about a predetermined wavelength as a function of the chemical species for removal is emitted through each said region.

2. A method as claimed in Claim 1, wherein said pollutant residual products of said combustion process are nitric oxides NOₓ generated at the transient operating stages of a boiler of a normally low-emission thermal system; characterized in that laser emission at said scanning step is performed about the oxygen absorption line, at about 760 nm.

3. A method as claimed in Claim 2, characterized in that said regions are different predetermined internal regions of said boiler; said chemical reagent being injected into each region by means of at least one nozzle located at said region, inside the boiler.

4. A method as claimed in Claim 2 or 3, characterized in that ammonia or urea or other reagent is injected as a function of the process conditions detected at that moment.

5. A method as claimed in one of the foregoing Claims, characterized by comprising a preliminary step of detecting, in the exhaust fumes of said combustion process, parameters relative to said pollutant residual product for removal; said scanning step being started upon said parameters reaching a predetermined threshold.

6. A device for noncatalytically removing pollutant residual products, in particular NOₓ, of a combustion process in a thermal system by injecting reagents into the thermal system, characterized by comprising:
- a number of laser diode systems, each for accurately determining the instantaneous temperature and concentration values of a pollutant for removal in a predetermined region of at least one section of said thermal system; said laser diode systems being of such a number and so located that the total volume of said regions monitored thereby is at least equal to the total volume of said section;
- a number of nozzles, at least one for each said region, housed inside said section and for evenly injecting a predetermined chemical reagent into the respective said region;
- at least one sensor for detecting, in the exhaust fumes of the thermal system, a predetermined parameter related to the generation of said pollutant for removal;
- a central control unit for receiving the signals of said at least one exhaust fume sensor, and, as a function of said signals, for activating said laser diode systems to scan each said region with radiation varying within a wide frequency band and about a predetermined wavelength depending on the pollutant for removal, and for subsequently injecting into each said region, by means of a respective nozzle, a quantity of said chemical reagent depending on the detected temperature and possibly also the detected concentration value of the pollutant.

7. A device as claimed in Claim 6, characterized by comprising a circuit for distributing said chemical reagent and comprising at least a storage reservoir and a supply line for supplying the reagent to each said nozzle; each line being controlled by at least a valve connected to said central control unit.

8. A device as claimed in Claim 6 or 7 and applied to a boiler of a thermal system; characterized in that said laser diode systems and said respective nozzles are so arranged as to cover adjacent regions of two sections of the boiler: a first section towards a radiating portion of the boiler, and a second section towards a superheater of the boiler.

9. A device as claimed in Claim 8, wherein said pollutant for removal is NOₓ; characterized in that said laser diode systems provide for effecting emissions about the oxygen absorption line, at about 760 nm; said device also comprising supply means for supplying ammonia or urea to each of said nozzles and controlled independently by said central control unit.

10. A device as claimed in Claim 9, characterized by also being designed to remove SO₂; said device comprising means for supplying said nozzles with a basic reagent as a function of the temperature value and possibly also the concentration value of the pollutant detected by said laser diode systems.
